# EUROPÄISCHE PATENTSCHRIFT

(11) **EP 1 076 409 B1**
(45) Veröffentlichungstag und Bekanntmachung des Hinweises auf die Patenterteilung: **15.09.2010**
(21) Anmeldenummer: 00116042.3
(22) Anmeldetag: 26.07.2000
(51) Int. Cl.: H02P 3/06, H02H 9/00

(54) **Schaltungsanordnung zur Leistungssteuerung eines elektrischen Verbrauchers**
Power control circuit of an electric consumer
Circuit pour la commande de puissance d'un consommateur électrique

(30) Priorität: 10.08.1999 DE 19937626
(43) Veröffentlichungstag der Anmeldung: 14.02.2001
(73) Patentinhaber: BSH Bosch und Siemens Hausgeräte GmbH, 81739 München (DE)
(72) Erfinder: Strehler, Thomas, 97616 Bad Neustadt (DE); Freund, Elmar, 97618 Rödelmaier (DE)

(56) Entgegenhaltungen:
- EP-A- 0 678 271
- DD-A- 286 912
- DE-A- 2 539 543
- DE-A- 2 746 845
- DE-A- 2 935 807
- DE-A- 3 444 745
- DE-A- 19 755 368
- DE-C- 4 233 542

## Beschreibung

Die Erfindung bezieht sich auf eine Schaltungsanordnung zur Leistungssteuerung eines elektrischen Verbrauchers, insbesondere eines Motors in einem Staubsauger, durch die die Leistung des Verbrauchers durch ein steuerbares Halbleiterschaltelement steuerbar ist und in der eine Strombegrenzungsschaltung zur Laststrombegrenzung des Verbrauchers angeordnet ist.

Schaltungen zur Einschaltstrombegrenzung sind in vielfältiger Form bekannt, beispielsweise aus der EP 0 678 271 A2, DE 27 46 845 A1, DE 25 39 543 A1, DE 42 33 542 C1, DE 29 35 807 A1, EP 0 678 271 A2, DE 34 44 745 A1, DD 286 912 A5, DE 197 55 368 A1. Solche Einschaltstrombegrenzungs- oder Sanftanlaufschaltungen sind insbesondere bei induktiven Verbrauchern mit höheren Nennlasten sinnvoll, da sich bei deren Einschalten unter Umständen sehr hohe Einschaltströme ergeben, die ein Vielfaches des Nennstroms tragen. Durch Sanftanlaufschaltungen wird sichergestellt, daß Netzsicherungen nicht ansprechen, weil dem jeweiligen Verbraucher, insbesondere dem Motor eines Elektrohandgeräts, insbesondere eines Staubsaugers oder eines Elektrowerkzeugs wie einem Winkelschleifer oder einer Bohrmaschine, ein anfänglich künstlich begrenzter Einschaltstrom zugeführt wird, der erst nach einiger Zeit, wenn der Elektromotor auf Touren gekommen ist und nicht mehr einen so hohen Strom benötigt, höhere Werte annimmt. Die Einschaltspitzenströme betragen beispielsweise bei Staubsaugern mehr als 50 A. Dasselbe Problem stellt sich bei einer abrupten oder starken Leistungserhöhung des Verbrauchers.

Im übrigen wird der Motor durch eine Steuerschaltung mit Spannung beaufschlagt. Die Steuerschaltung weist zur Steuerung des Motors ein Halbleiterbauelement auf, beispielsweise einen Triac.

Der Nachteil einer Strombegrenzungsschaltung besteht darin, daß sie je nach Ausführungsart verlustbehaftet ist, was zu einem erhöhten Spannungsabfall in der gesamten Schaltungsanordnung führt und somit eine geringere Spannung am Motor verursacht, so daß dieser eine geringere Leistung aufweist, als bei voller Ausnutzung der zur Verfügung stehenden Netzspannung möglich wäre.

Derzeit werden diese Verluste durch aufwendige Schaltungen, beispielsweise durch Mikrocontroller-Schaltungen oder durch Lösungen mit besonderen flachen Anschnittschaltkreisen verringert.

Es ist die Aufgabe der Erfindung, eine Schaltungsanordnung der eingangs genannten Art derart zu verbessern, daß die Strombegrenzungsschaltung nach dem Ende der Einschaltphase oder einer Hochlaufphase wenigstens im wesentlichen keine Spannung mehr verbraucht.

Diese Aufgabe wird erfindungsgemäß mit der Schaltungsanordnung gemäß Anspruch 1 gelöst.

Damit entfallen beim Übergang von der Anlaufphase in den normalen Betrieb mit einem Nennstrom, der weit geringer ist als der Spitzenstrom während der Anlaufphase, also beispielsweise bei einem Staubsauger zwischen 6 und 7 A beträgt, die elektrische Verluste verursachenden Schaltungselemente der Strombegrenzungsschaltung. Die volle Netzspannung steht somit zur Versorgung des Motors zur Verfügung, so daß dieser mit voller Leistung arbeitet.

Erfindungsgemäß wird lediglich ein einfach aufgebautes zeitabhängiges Stellglied eingesetzt, um die Strombegrenzungsschaltung abzuschalten, so daß im Unterschied zum Einsatz eines Microcontrollers oder einer aufwendigen Schaltung ein einfaches Mittel geschaffen wird, um Stromverluste zu vermeiden.

Die Erfindung läßt sich ebenso bei einer Schaltungsanordnung zur Leistungssteuerung wie zu Leistungsregelung des Verbrauchers einsetzen. Das Schaltmittel ist erfindungsgemäß ein zeitabhängiger Schalter, der verzögert schaltet, d. h. beispielsweise geschlossen oder geöffnet wird, je nach Schaltungsauslegung und Position des Stellgliedes in der Schaltung oder ist ein schaltendes Halbleiterelement.

Die Zeitverzögerung wird erfindungsgemäß entweder direkt in Abhängigkeit der Zeit nach dem Einschalten der Netzspannung erreicht oder indirekt über die Abhängigkeit eines oder mehrerer Betriebszustände des Verbrauches, beispielsweise eines Universalmotors, oder der Umgebung des Verbrauchers. Hierunter ist beispielsweise die Erwärmung der Umgebung zu verstehen, die sich beispielsweise durch einen erhöhten Widerstand eines PTC-Widerstandes ausdrückt. Auch andere thermische Schalter, beispielsweise Bimetall-Schalter, kommen in Betracht.

Das Stellglied ist in jedem Fall so innerhalb der gesamten Schaltungsanordnung angebracht, daß sich bei Wiedereinschalten des Gerätes oder bei einem schnellen Ändern der Betriebszustände des Gerätes, beispielsweise durch einen Sprung auf maximale Leistung des Verbrauchers, aus einer Stand-by-Position heraus der gesamte Ablauf wiederholt.

Insbesondere läßt sich die Schaltungsanordnung in einem Staubsauger einsetzen, dessen Motor im Gebläse einen Unterdruck erzeugt, so daß nach Unterschreiten eines bestimmten Druckwertes ein Unterdruckschalter betätigt wird, der die Verlust verursachenden Schaltungselemente der Strombegrenzungsschaltung abschaltet.

Als Zeitglieder eignen sich aber darüber hinaus auch Schalter mit einem zusätzlich verzögerten Schaltkontakt, beispielsweise mit einem viskos-elastischem System, elektrische Zeitgeber, beispielsweise bestehend aus einem RC-Glied, insbesondere in Verbindung mit einem Halbleiterbauelement, beispielsweise einem Transistor, oder thermoelektrische Bimetallschalter.

Es versteht sich, daß sich die Erfindung in Verbindung mit beliebigen anderen Strombegrenzungsschaltungen, insbesondere Anlaufstrombegrenzungsschaltungen, einsetzen läßt.

Es ist nicht unbedingt notwendig, daß überhaupt kein Strom mehr durch die Strombegrenzungsschaltung fließt. Vielmehr ist es auch ausreichend, wenn, beispielsweise durch Abnahme eines elektrischen Widerstandes durch Erwärmung, ein zu der Strombegrenzungsschaltung paralleler Strompfad elektrisch stärker leitend wird.

Weitere vorteilhafte Ausbildungen ergeben sich aus den Unteransprüchen.

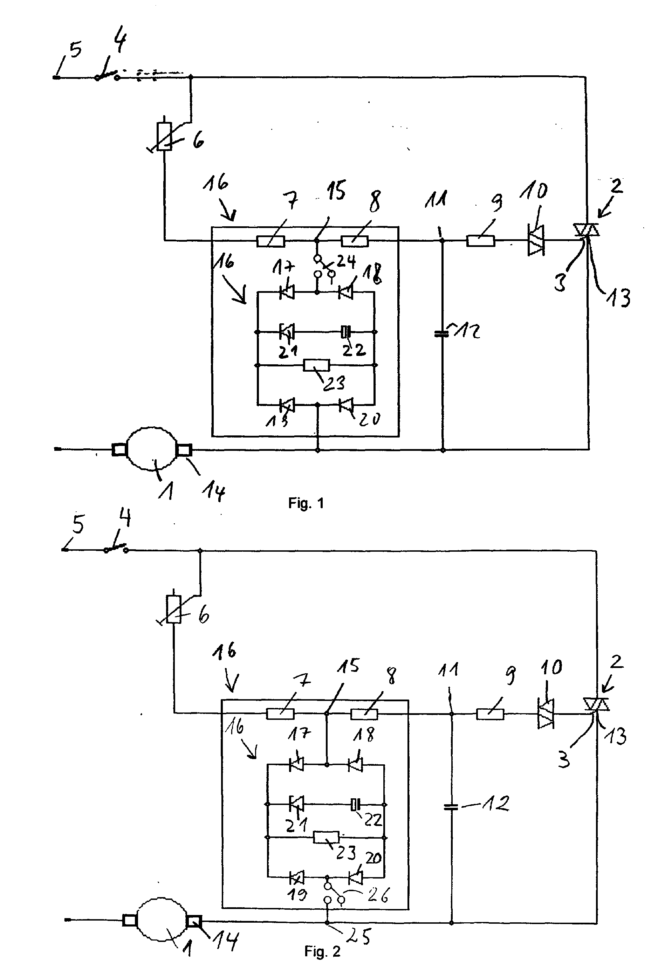

Nachstehend wird die Erfindung in Ausführungsbeispielen anhand der Figuren 1 bis 8 näher erläutert. Diese zeigen Schaltungsanordnungen einer Phasenanschnitt-Steuerschaltung und mit einer Strombegrenzungsschaltung.

Ein elektrischer Verbraucher, insbesondere ein Motor 1, der beispielsweise als Gebläsemotor in einem Staubsauger dient, wird eine über ein steuerbares Halbleiterschaltelement 2 in seiner Leistung gesteuert oder geregelt. Das Halbleiterschaltelement 2 ist mit seinem Steueranschluß 3 an eine Spannungsversorgung angeschlossen, die von einer Phasenanschnitt-Steuerschaltung gebildet wird. In dieser ist ein Schalter 4 angeordnet, der mit einer Netzanschlußklemme 5 verbunden ist. Nach Einschalten des Schalters 4 wird der Steueranschluß 3 des Halbleiterschaltelements 2 über ein Potentiometer 6 und über zu diesem in Reihe liegende Widerstände 7, 8 und 9 sowie ein Diac 10 als Ansteuerglied mit Spannung versorgt, so daß er in beiden Halbwellen der speisenden Netzwechselspannung zum Motor 1 durchschaltet.

Über einen Brückenschaltungspunkt 11, der zwischen den Widerständen 8 und 9 angeordnet ist, ist ein Kondensator 12 parallel zu dem Widerstand 9, dem Diac 10 und dem Halbleiterschaltelement 2 geschaltet. Der Kondensator 12 wird nach Einschalten der Spannung über den Schalter 4 über das Potentiometer 6 sowie die Widerstände 7 und 8 je nach Stellung des Potentiometers 6 mehr oder weniger schnell aufgeladen. Erreicht die Spannung an dem Kondensator 12 unabhängig von ihrer Polarität die Durchbruchspannung des Diacs 10, so wird dieser leitfähig, so daß der Kondensator 12 sich über eine bestimmte Zeit hin über den Widerstand 9 entlädt, bis über den Steueranschluß 3 und einen Hauptanschluß 13 des Halbleiterschaltelements 2 ein Laststrom zu einer Anschlußklemme 14 des Motors 1 fließt.

Das Halbleiterschaltelement 2 ist dabei so lange leitend, wie noch ein gewisser Strom, der sogenannte Haltestrom, durch es hindurchfließt. Dabei wird von den beiden Halbwellen des Wechselstromsignals entsprechend der Stellung des Potentiometers 6 nur ein bestimmter Phasenwinkel ausgenutzt, um den Motor 1 anzutreiben.

Zwischen einem Brückenschaltungspunkt 15, der sich zwischen den Widerständen 7 und 8 befindet, sowie der Anschlußklemme 14 des Motors 1 ist eine Strombegrenzungsschaltung angeordnet. Diese dient zur Begrenzung der Schalthysterese, die besonders nach dem Einschalten des Schalters 4, also bei Inbetriebnahme des Motors 1, auftritt. Die Strombegrenzungsschaltung 16 weist daher eine aus vier Dioden 17, 18, 19 und 20 bestehende Brückengleichrichterschaltung auf, wobei die Dioden 17 und 18 bzw. 19 und 20 jeweils so angeordnet sind, daß sie für die aneinander entgegengesetzten Halbwellen der Wechselspannung durchlässig ist. In zwei weiteren Brückenzweigen der Gleichrichterschaltung sind eine Zenerdiode 21 sowie ein Elektrolytkondensator 22 und ein Widerstand 23 angeordnet. Aufgrund der Anordnung der Dioden 17 bis 20 wird der Elektrolytkondensator 22 nur mit Gleichspannung versorgt, wobei die Zenerdiode 21 die Spannung zum Laden des Elektrolytkondensators 22 begrenzt. Die Funktionsweise der Steuerbegrenzungsschaltung 16 ist somit die, daß zunächst bis zum Erreichen der von der Zenerdiode 21 maximal zugelassenen Spannung der Elektrolytkondensator 22 geladen wird und erst nach Überschreiten dieser Spannung der Kondensator 12 aufgeladen wird. Dabei dient der Widerstand 23 als Entladewiderstand für den Elektrolytkondensator 22.

Da die Strombegrenzungsschaltung 16 jedoch ihrerseits Strom verbraucht, ist es nur in der Zeit nach dem Einschalten des Netzes oder nach einer Leistungserhöhung des Verbrauchers erwünscht, daß der Hystereseeffekt der Phasenanschnittsteuerschaltung begrenzt wird. Nach einer gewissen Zeitdauer, die in Abhängigkeit von der Dimensionierung der Widerstände 7, 8 und 9 sowie der Position des Potentiometers 6 verschieden ist, wird erfindungsgemäß die Strombegrenzungsschaltung 16 ausgeschaltet, wozu ein zwischen dem Brückenschaltungspunkt 15 und dem Eingang der Strombegrenzungsschaltung 16 angeordneter Schalter 24 vorgesehen ist.

Alternativ ist anstelle des Schalters 24 zwischen dem Ausgang der Strombegrenzungsschaltung 16 und einem Brückenschaltungspunkt 25 ein Schalter 26 vorgesehen (Fig. 2).

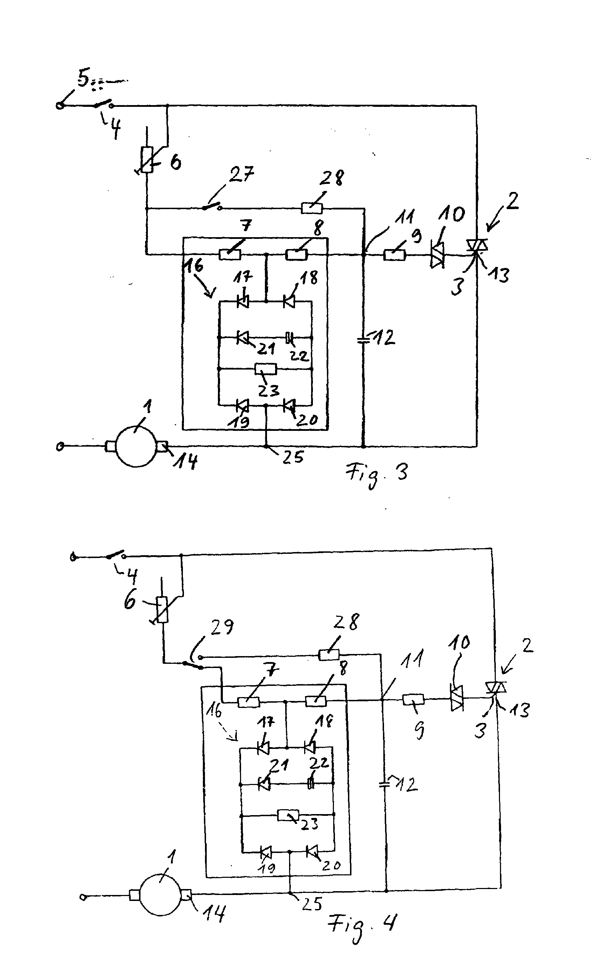

In einem weiteren Ausführungsbeispiel (Fig. 3) ist ein Schalter 27 zusammen mit einem Widerstand 28 parallel zu den Widerständen 7 und 8 geschaltet.

Ein Schalter 29 (Fig. 4) schaltet die Wechselspannung entweder über den Widerstand 7 zu der Strombegrenzungsschaltung 16 durch, also beispielsweise nach dem Einschalten der Schaltung oder bei einer starken Leistungsveränderung, oder der Schalter 29 schaltet das Potentiometer 6 in Reihe mit dem Widerstand 28, so daß die Strombegrenzungsschaltung 16 umgangen wird und der Kondensator 12 unmittelbar geladen wird.

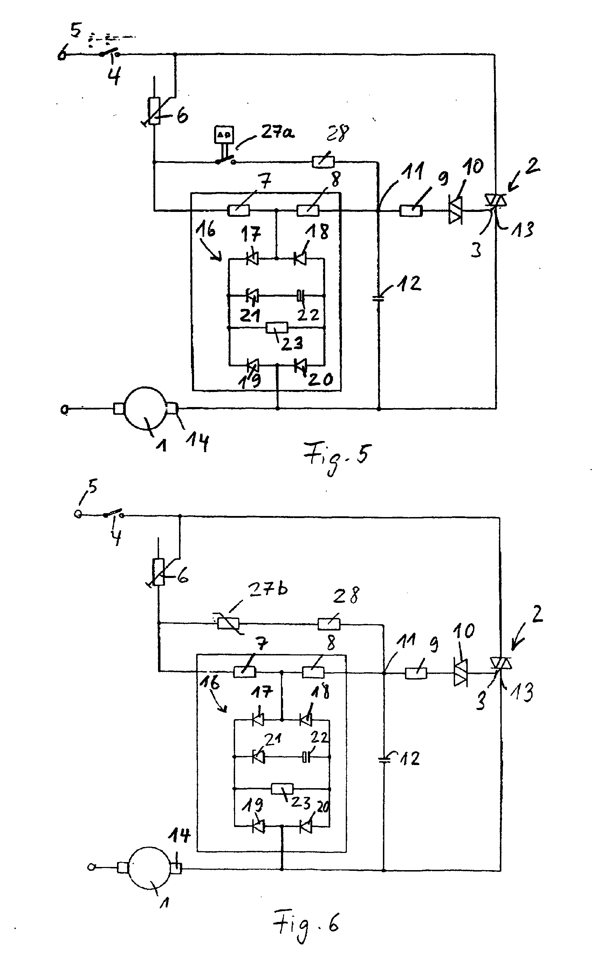

Der in Fig. 3 dargestellte Schalter 27 ist in einer bevorzugten Ausführungsform (Fig. 5) als Unterdruckschalter 27a ausgeführt. Wenn der Motor 14 als Gebläsemotor, beispielsweise in einem Staubsauger, ausgebildet ist, ist ein mit dem Unterdruckschalter 27a in Verbindung stehender Unterdrucksensor im Ansaugteil des Gebläses angeordnet, so daß nach Unterschreiten eines vorgegeben Drucks der Unterdruckschalter 27a schließt, wodurch die Strombegrenzungsschaltung 16 umgangen wird.

Alternativ ist der Schalter 27 in einem weiteren Ausführungsbeispiel (Fig. 6) als temperaturabhängiger Schalter 27b ausgebildet. Der Schalter 27b ist beispielsweise ein mit der Temperatur sinkender Widerstand, also vorzugsweise ein PTC- oder ein NTC-Widerstand, der mit dem Steigen der Temperatur abnimmt, so daß der Strompfad zwischen dem Potentiometer 6 und dem Brückenschaltungspunkt 11 leitend wird.

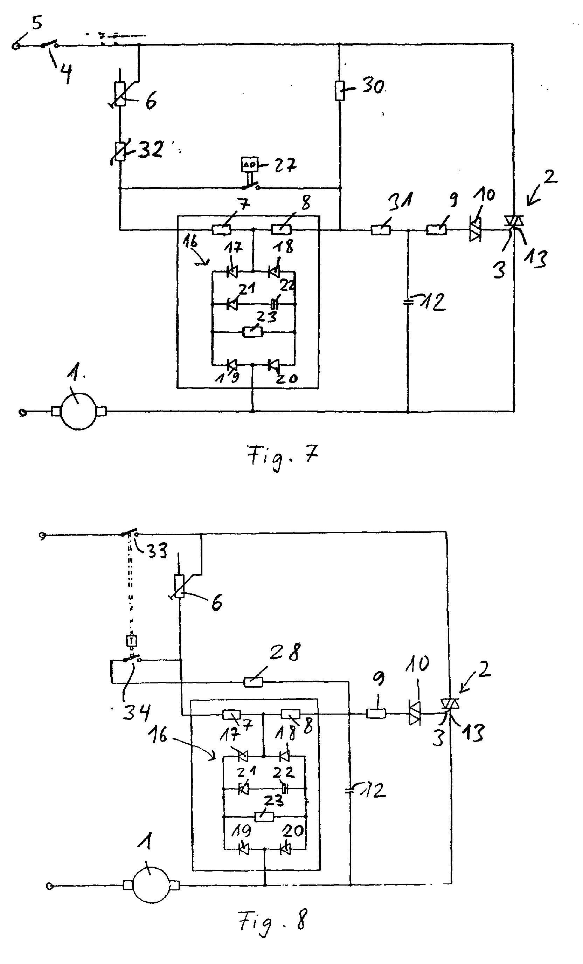

In einer anderen Ausführungsform (Fig. 7) ist vorgesehen, daß nach dem Einschalten des Schalters 4 der Strom zunächst über einen parallel zu dem Potentiometer 6 angeordneten Widerstand 30 fließt, wobei der Pfad zu der Strombegrenzungsschaltung 16 frei ist, wobei gewährleistet ist, daß der Motor 1 während der Einschaltphase unabhängig von der Stellung des Potentiometers 6 mit einer fest vorgegebenen Spannung versorgt wird, die sich entsprechend der Dimensionierung der Widerstände 30, 9 und eines zusätzlich vor dem Brückenschaltungspunkt 11 angeordneten Widerstandes 31 ergibt. Erst nach Überschreiten einer gewissen Temperatur, beispielsweise der Temperatur im Bereich der Staorwicklung des Motors 1, wird ein in Reihe zu dem Potentiometer 6 angeordneter, durch diese Temperatur beaufschlagter Widerstand 32 elektrisch leitend, so daß durch den Bediener das Potentiometer 6 wirksam betätigbar wird. Dabei fließt nur so lange Strom durch die Strombegrenzungsschaltung 16, wie ein parallel zu den Widerständen 7 und 8 angeordneter Unterdruckschalter 33 noch nicht geschlossen ist. Wenn er nach Erreichen eines vorgegebenen Unterdrucks schließt, fließt der Strom unter Umgehung der Strombegrenzungsschaltung 16 unmittelbar entweder über das Potentiometer 6 oder den Widerstand 30 zu dem Widerstand 31 und lädt den Kondensator 12 auf.

In einer anderen Ausführungsform (Fig. 8) ist anstelle des Schalters 4 ein Schalter 33 mit einem zeitverzögerten Kontakt 34 vorgesehen. Der Kontakt 34 schaltet nach Ablauf einer gewissen, vorgegebenen Zeitdauer den den Widerstand 28 umfassenden Strompfad zu dem Steueranschluß 3, so daß die Strombegrenzungsschaltung 16 umgangen wird.

Es versteht sich, daß die in Fig. 1 bis 8 dargestellten Ausführungsformen der Schaltung zum Umgehung der Strombegrenzungsschaltung 16 nur beispielhaft sind. Allgemein wird gemäß der Erfindung vorgesehen, nicht nur nach Beendigung der Einschaltphase, sondern auch nach dem Abschluß einer Leistungserhöhungsphase des Verbrauchers, insbesondere des Motors 1, die Wirkung der Strombegrenzungsschaltung 16 aufzuheben, wozu erfindungsgemäß entweder den Strompfad durch die Strombegrenzungsschaltung 16 unterbrechende Schalter 24, 26, 27, 29 mit Schaltkontakten vorgesehen sind oder Schalter mit einem verzögerten Schaltkontakt, wie der Schalter 33, der beispielsweise auf einem viskos-elastischen System beruht, oder elektrische Zeitglieder, beispielsweise RC-Glieder, die beispielsweise in Verbindung mit einem Halbleiterbauteil, z. B. einem Transistor, einen Strom durchschalten, oder es werden thermoelektrische Schalter, beispielsweise in Form von NTC- oder PTC-Widerständen oder als Bimetallschalter, vorgesehen. Ebenso lassen sich auch andere Schaltmittel vorsehen, die eine oder mehrere Betriebsgrößen des elektrischen Verbrauchers nach erfolgtem Hochlauf oder nach erfolgter Leistungserhöhung auswerten und entsprechend Strompfade freischalten, durch die die Strombegrenzungsschaltung 16 umgangen wird. Als zu erfassende Größen eignet sich neben der Temperatur, dem Druck oder dem Unterdruck auch die Spannung oder der Strom innerhalb der Schaltung.

Die Erfindung läßt sich universell bei allen motorischen Geräten mit einem Motor, beispielsweise einem Universalmotor und einer mit Strombegrenzung einsetzen, wobei es ausreicht, wenn die Strombegrenzungsschaltung aus einem RC-Glied besteht, das parallel zur Phasenanschnittsteuerschaltung geschaltet ist. Durch den Einsatz der Erfindung werden Spannungsverluste durch die Strombegrenzungsschaltung minimiert.

## Patentansprüche

1. Schaltungsanordnung zur Leistungssteuerung eines elektrischen Verbrauchers, insbesondere eines Motors (1) in einem Staubsauger, durch die die Leistung des Verbrauchers durch ein steuerbares Halbleiterschaltelement (2) steuerbar ist und in der eine Strombegrenzungsschaltung (16) zur Laststrombegrenzung des Verbrauchers angeordnet ist, **dadurch gekennzeichnet, dass** ein der Strombegrenzungsschaltung zugeordnetes Schaltmittel (24, 26, 27, 29; 27a, 27b; 33, 34) vorgesehen ist, das nach Beendigung der Anlaufphase oder einer Hochlaufphase des Verbrauchers derart schaltbar ist, daß die Strombegrenzungsschaltung (16) wenigstens im wesentlichen stromlos ist; wobei
das Schaltmittel (24, 26, 27, 29; 27a, 27b; 33, 34) ein mit Zeitverzögerung schaltender Schalter (33, 34) ist; und
wobei die Zeitverzögerung entweder direkt in Abhängigkeit der Zeit nach dem Einschalten der Netzspannung oder indirekt über die Abhängigkeit eines oder mehrerer Betriebszustände des Verbrauches, oder der Umgebung des Verbrauchers erreichbar ist.

2. Schaltungsanordnung nach Anspruch 1, **dadurch gekennzeichnet, dass** das Schaltmittel ein Schaltkontakte aufweisender Schalter (24, 26) am Eingang oder am Ausgang der Strombegrenzungsschaltung (16) ist.

3. Schaltungsanordnung nach Anspruch 1, **dadurch gekennzeichnet, dass** das Schaltmittel ein in einem zu einem Eingangswiderstand (7) der Strombegrenzungsschaltung (16) parallelen Strompfad angeordneter Schalter (27) ist, der nach Beendigung der Anlauf- oder Hochlaufphase des Verbrauchers schließbar ist.

4. Schaltungsanaordnung nach Anspruch 1, **dadurch gekennzeichnet, dass** das Schaltmittel ein Schalter (29) zwischen dem Eingang der Strombegrenzungsschaltung (16) und einem sie umgehenden Strompfad ist, der nach der Beendigung der Anlauf- oder der Hochlaufphase des Verbrauchers umschaltbar ist.

5. Schaltungsanordnung nach Anspruch 3 oder 4, **dadurch gekennzeichnet, dass** das Schaltmittel ein thermischer Schalter ist.

6. Schaltungsanordnung nach Anspruch 5, **dadurch gekennzeichnet, dass** der Schalter ein PTC- oder ein NTC-Widerstand (27b, 32) ist.

7. Schaltungsanordnung nach einem der Ansprüche 1 bis 4, **dadurch gekennzeichnet, dass** das Schaltmittel ein Unterdruckschalter (27a) ist.

8. Schaltungsanordnung nach Anspruch 7, **dadurch gekennzeichnet, dass** der Unterdruckschalter (27a) im Luftansaugkanal eines Staubsaugers angeordnet ist.

## Claims

1. Circuit arrangement for power control of an electrical consumer, particularly a motor (1) in a vacuum cleaner, by which the power of the consumer is controllable by a controllable semiconductor switching element (2) and in which a current limiting circuit (16) for load-current limitation of the consumer is arranged, **characterised in that** a switching means (24, 26, 27, 29; 27a, 27b; 33, 34), which is associated with the current limiting circuit and which after the conclusion of the start-up phase or of a run-up phase of the consumer is switchable in such a manner that the current limiting circuit (16) is at least substantially free of current, is provided, wherein the switching means (24, 26, 27, 29; 27a, 27b; 33, 34) is a switch (33, 34) switching with a time delay and wherein the time delay is attainable either directly in dependence on the time after the switching-on of the mains voltage or indirectly by way of the dependence of one or more operating states of the consumer or of the environment of the consumer.

2. Circuit arrangement according to claim 1, **characterised in that** the switching means is a switch (24, 26), which has switch contacts, at the input or output of the current limiting circuit (16).

3. Circuit arrangement according to claim 1, **characterised in that** the switching means is a switch (27) which is arranged in a current path parallel to an input resistance (7) of the current limiting circuit (16) and which is closable after the conclusion of the start-up or run-up phase of the consumer.

4. Circuit arrangement according to claim 1, **characterised in that** the switching means is a switch (29) between the input of the current limiting circuit (16) and a current path bypassing it, which switch can be switched over after the conclusion of the start-up or run-up phase of the consumer.

5. Circuit arrangement according to claim 3 or 4, **characterised in that** the switching means is a thermal switch.

6. Circuit arrangement according to claim 5, **characterised in that** the switch is a PTC or an NTC resistor (27b, 32).

7. Circuit arrangement according to any one of claims 1 to 4, **characterised in that** the switching means is a negative-pressure switch (27a).

8. Circuit arrangement according to claim 7, **characterised in that** the negative pressure switch (27a) is arranged in the air suction channel of a vacuum cleaner.

## Revendications

1. Agencement de circuit pour la commande de puissance d'un consommateur électrique, en particulier d'un moteur (1) dans un aspirateur, par lequel la puissance du consommateur peut être commandée par un élément de commutation à semi-conducteur (2) contrôlable et dans lequel est disposé un circuit de limitation de courant (16) pour la limitation du courant de charge du consommateur, **caractérisé en ce qu'**un moyen de commutation (24, 26, 27, 29 ; 27a, 27b ; 33, 34) attribué au circuit de limitation de courant est prévu, lequel moyen peut être commuté après la fin de la phase de démarrage ou d'une phase d'accélération du consommateur de telle sorte que le circuit de limitation de courant (16) est au moins principalement sans courant,
le moyen de commutation (24, 26, 27, 29 ; 27a, 27b ; 33, 34) étant un commutateur (33, 34) commutant avec temporisation ; et
la temporisation pouvant être obtenue soit directement en fonction du temps après l'enclenchement de la tension de réseau soit indirectement par la dépendance d'un ou de plusieurs état de service de la consommation, ou de l'environnement du consommateur.

2. Agencement de circuit selon la revendication 1, **caractérisé en ce que** le moyen de commutation est un commutateur (24, 26) présentant des contacts de commutation à l'entrée ou à la sortie du circuit de limitation de courant (16).

3. Agencement de circuit selon la revendication 1, **caractérisé en ce que** le moyen de commutation est un commutateur (27) disposé dans un chemin de courant parallèle à une résistance d'entrée (7) du circuit de limitation de courant (16), qui peut être fermé après la fin de la phase de démarrage ou de la phase d'accélération du consommateur.

4. Agencement de circuit selon la revendication 1, **caractérisé en ce que** le moyen de commutation est un commutateur (29) entre l'entrée du circuit de limitation de courant (16) et un chemin de courant qui l'entoure, lequel peut être commuté après la fin de la phase de démarrage ou de la phase d'accélération du consommateur.

5. Agencement de circuit selon la revendication 3 ou 4, **caractérisé en ce que** le moyen de commutation est un commutateur thermique.

6. Agencement de circuit selon la revendication 5, **caractérisé en ce que** le commutateur est une résistance PTC ou une résistance NTC (27b, 32).

7. Agencement de circuit selon l'une quelconque des revendications 1 à 4, **caractérisé en ce que** le moyen de commutation est un commutateur à dépression (27a).

8. Agencement de circuit selon la revendication 7, **caractérisé en ce que** l'interrupteur à dépression (27a) est disposé dans le canal d'aspiration d'air d'un aspirateur.
